Europäisches Patentamt

(19) **European Patent Office**

Office européen des brevets

(11) Publication number: **0 039 713**

**B1**

(12) # EUROPEAN PATENT SPECIFICATION

(45) Date of publication of patent specification: **25.01.84**

(51) Int. Cl.³: **A 01 C 17/00**

(21) Application number: **80902217.1**

(22) Date of filing: **12.11.80**

(86) International application number:
**PCT/NO80/00037**

(87) International publication number:
**WO 81/01352 28.05.81 Gazette 81/13**

(54) **DOSING APPARATUS FOR GRANULAR OR POWDER MATERIAL.**

(30) Priority: **14.11.79 NO 793687**

(43) Date of publication of application:
**18.11.81 Bulletin 81/46**

(45) Publication of the grant of the patent:
**25.01.84 Bulletin 84/4**

(84) Designated Contracting States:
**DE FR GB SE**

(56) References cited:
**DE - A - 1 957 634**
**DE - A - 2 043 362**
**DE - A - 2 804 253**

(73) Proprietor: **Stokland, Sigmund**
**Kaupang Gaard**
**N-3080 Holmestrand (NO)**

(72) Inventor: **Stokland, Sigmund**
**Kaupang Gaard**
**N-3080 Holmestrand (NO)**

(74) Representative: **Simonnot, Bernard et al,**
**Cabinet Simonnot 49, Rue de Provence**
**F-75442 Paris Cédex 09 (FR)**

Courier Press, Leamington Spa, England.

1      **0 039 713**      2

## Dosing apparatus for granular or powder material

The present invention relates to a dosing apparatus for granular or powder material, comprising a feeding-out device which is rotatable about a normally substantially vertical axis, and is adapted to be supplied with said material in a central material-receiving area, whereby the supplied material by rotation of the device is flung out from the central area by the action of the centrifugal force, to be fed out through a plurality of feed openings, said apparatus further comprising first and second, coaxially disposed outfeed means which are arranged to rotate with mutually differing speeds, the outfeed means having cooperating parts which, by relative speed difference between said cooperating parts, move the flung-out material out through said outfeed openings.

Such a dosing apparatus or centrifugal feeding-out device which is supplied with "flowable" material, such as grain, seed, fertilizer or the like, from a receptacle so that the feeding-out device is filled at the center, is characteristic of several centrifugal feeding-out devices, see for example DE-A 2 043 362, where a rotatable feed screw is placed in a passage between the bottom of the receptacle and a centrifugal fan, and where the feed out quantity can be set infinitely variable if the inlet to the screw-formed channel of the feed screw is made bigger or smaller by means of a rotary flap or plate. The previously known centrifugal feeding-out devices operate with relatively high rotational speeds, and it is in practice attended with difficulties to dose the material quantities with varying speeds, such as is e.g. done with conventional outfeed rollers. The speeds become too high for large quantities since there are considerable quantity variations in the type of machine in question. Similarly, also the openings from the outfeed means easily become too small when the quantities are adjusted only by means of larger and smaller openings or volumes.

The object of the invention is therefore to provide a dosing apparatus which is based on the centrifugal outfeed principle, but which is without the aforementioned drawbacks and which enables a very stable feedingout of very small as well as of larger material quantities per unit of time, both when it is the question of material consisting of relatively large grains or particles and when it is the question of material consisting of very small particles, i.e. powder material.

For the achievement of the above-mentioned object there is provided a dosing apparatus of the type set forth above which, according to the invention is characterized in that the first outfeed means, containing said central area, comprises inner and outer circumferentially extending, shielding walls each having said outfeed openings mutually displaced along the circumference, and defining an outfeed compartment together with a boundary wall of the second outfeed means, and in that the outfeed openings of the outer shielding wall are sufficiently circumferentially displaced in relation to the outfeed openings of the inner shielding wall that the outer shielding wall prevents direct discharge of material from the outfeed openings of the inner shielding wall, and in that the second outfeed means is provided with a plurality of outfeed elements projecting upwards in the outfeed compartment and being circumferentially spaced along the outfeed compartment.

The dosing apparatus according to the invention, which operates with mutually different speeds on its two outfeed means, will not have any difficulties in that it has to be driven with high, unrealistic speeds or has to work with too small outfeed openings. When e.g. the shielding walls with the outfeed openings have the same speed as outfeed elements on the second outfeed means, this works as if both outfeed means stand still irrespective of what rotational speed they might have. In practice this means that the outfeed elements, for example, give larger discharged material quantities the faster or the slower they move in relation to the outfeed openings. It is here essential that, with the present apparatus, one may use the same large outfeed openings also for small discharged or fed-out quantities. Even if one might also vary the size of the outfeed openings, one has found that pure speed regulation normally is preferable.

The invention will be more closely described below in connection with two exemplary embodiments with reference to the accompanying drawings, wherein

Fig. 1 shows a longitudinal, central section through a dosing apparatus according to the invention;

Fig. 2 shows a section along the line II—II in Fig. 1;

Fig. 3 shows another embodiment of a dosing apparatus according to the invention which is illustrated partly in side view and partly in axial longitudinal section;

Fig. 4 shows an inner outfeed means in the apparatus in Fig. 3, partly in side view and partly in axial longitudinal section; and

Fig. 5 shows the outfeed means in Fig. 4, partly in top view and partly in cross-section along the line V—V in Fig. 4.

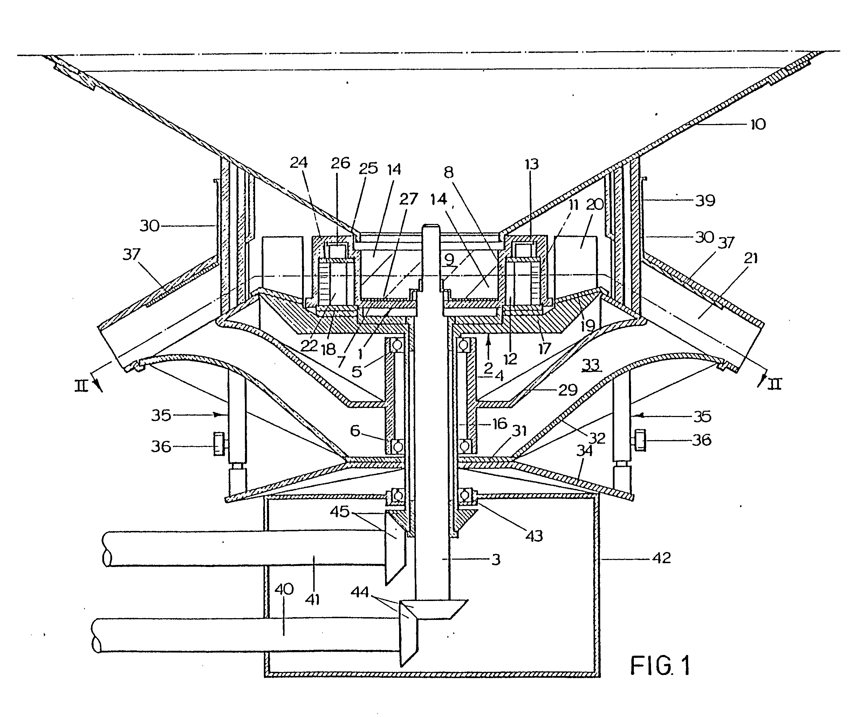

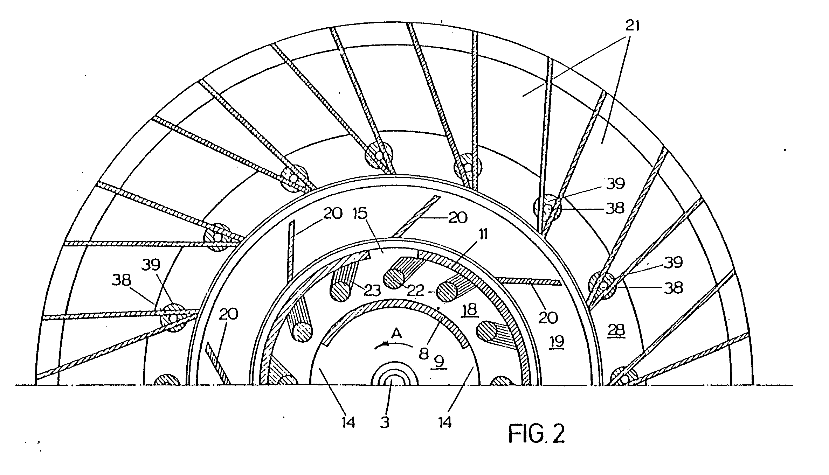

The embodiment shown in Figs. 1 and 2 has a feeding-out device comprising a first outfeed means 1 (hatched with lines inclined upwards to the right) and a second outfeed means 2 (hatched with lines inclined upwards to the left), of which the first outfeed means 1 is connected to or fixed in a suitable manner on a rotatable, central shaft 3 which in operational position is

2

substantially vertical as shown in Fig. 1, and of which the second outfeed means 2 is rotatably mounted on the shaft 3 and further is rotatably mounted in a stationary supporting means 4 by a bearing means which in the illustrated embodiment consists of a pair of ball bearings 5 and 6, respectively. Such as appears from Fig. 1, the stationary supporting means 4 is fixedly connected with and supported by additional stationary members forming part of the illustrated dosing apparatus and which are to be described more closely below.

The first outfeed means 1 comprises a bottom portion 7 which is located around the shaft 3 and is connected to an inner, cylindrical shielding wall 8 defining a central area 9 to which material to be fed out is supplied from an overlying, stationary feed hopper 10. Further, the outfeed means 1 comprises an outer cylindrical shielding wall 11 which is coaxial with the inner shielding wall 8 and together with the latter wall defines an annular compartment 12. The two shielding walls are connected by way of an upper plate portion 13 which thus forms an upper limitation of the annular compartment.

In the illustrated embodiment the inner shielding wall 8 is provided with a pair of diametrically opposite outfeed openings 14, and the outer shielding wall 11 is provided with a pair of diametrically opposite outfeed openings 15, the outer pair of openings being peripherally displaced in relation to the inner pair. It will be understood that also a larger number of outfeed openings could be used, each shielding wall having to have an outfeed opening which is angularly displaced in relation to the outfeed opening or openings in the other shielding wall, so that the outer wall by rotation of the outfeed means shields against direct feeding out of material from the opening or openings in the inner wall. To assist in smooth feeding-out from the apparatus, the outfeed openings of the first outfeed means 1 have inclined side limiting walls as suggested in Fig. 1, and more specifically such that these walls are inclined upwards and rearwards in relation to the movement direction.

The second outfeed means 2 comprises a sleeve portion 16 for said mounting on the shaft 3 and a supporting portion 17 projecting outwards at the upper end of the sleeve portion, which supporting portion firstly supports an annular plate member 18 defining a lower bottom surface in the annular compartment 12, and secondly supports an outer throwing dish or bowl 19 extending along the outside of the outer shielding wall 11. The throwing bowl 19 is provided with a number of upstanding, plate-shaped winnowing fans or throwing blades 20 for distribution of fed-out or discharged material to the inlet openings of a plurality of adjacent, stationary outfeed tubes 21 arranged around the outer circumference of the throwing bowl.

The second outfeed means 2 is further provided with a plurality of outfeed elements 22 projecting upwards in the annular compartment 12 from the bottom plate member 18 and being arranged with suitable spacing in the longitudinal direction of the annular compartment. In the illustrated embodiment the outfeed elements consist of cylindrical posts or pins having brush elements 23 projecting therefrom and wiping along the inner surface of the outer shielding wall 11. The distance between the outfeed elements 22 and the outer surface of the inner shielding wall 8 is sufficiently large to allow passage and prevent damage by sqeezing or crushing of the largest particles which the apparatus is intended to feed out.

As shown in Fig. 1, the outfeed elements 22 also support an additional, upper bottom plate member 24, so that in the upper portion of the annular compartment there is defined a smaller annular compartment 25 wherein outfeed elements 26 analogous to the outfeed elements 22 project upwards from the bottom plate member 24. This upper annular compartment 25 is provided for feeding-out of material consisting of small particles or being in powder form, and as shown the distance between the outfeed elements 26 and the inside located portion of the shielding wall 8 is substantially smaller than in the lower portion of the annular compartment. In order to provide for feeding out of material only to the upper annular compartment portion, a bottom-surface-forming cover 27 is provided in the central area 9 of the first outfeed means 1, which cover may be lifted from the illustrated position and fixed at a suitable height on the shaft 3 for feeding out material to the bottom plate member 24.

The outfeed tubes 21, which e.g. in connection with a seed drill constitute seed tubes connected to the drill coulters of the sowing machine, are provided with bottom openings 28 (Fig. 2) along the outer circumference of the throwing bowl 19 for supply of fed-out material to an underlying, stationary return bowl 29 forming connection between the stationary supporting member 4 and the stationary member comprising the outfeed tubes 21. The return bowl 29 is provided in order to be able to effect rotation test of the dosing apparatus, i.e. control of the function of the apparatus by rotation and feeding-out of material without the material being passed out through the outfeed tubes. For this purpose there are provided flap or gate means 30 for closing of the outfeed tubes 21 outside the bottom openings 28, so that the material is diverted to the return bowl 29 from which it flows downwards via a lower opening (not shown) and is fed out via a return plate 31 which is connected to the sleeve portion 16 of the second outfeed means 2.

In operation of the dosing apparatus the fed-out material is normally thrown over the bottom openings 28 of the outfeed tubes 21 and fed out directly through the outfeed tubes. However, for the return to the outfeed tubes of possible material which during normal operation falls down into the return bowl 29 and further down therefrom, there is provided a return throwing screen 32 which by way of an ejection channel 33 forms connection from the return plate 31 to the outfeed tubes 21. The return throwing screen 32 is carried by a supporting plate 34 which is fixedly connected to the second outfeed means, and it is height-adjustably arranged on the supporting plate 34 by means of telescopically adjustable tube connections 35 with associated set screws 36 for fixing of the return throwing screen 32 in the position of interest. Thus, in the illustrated, lower position the return throwing screen provides for return of material from the return bowl 29 to the outfeed tubes 21, whereas in an upper position it allows direct outlet of material flowing down from the return bowl.

The aforementioned gate means 30 are also provided to allow selective closing of the outfeed tubes, to enable feeding-out e.g. only through desired drill coulters on a sowing machine, in order to thereby adjust the row spacing. In order in this case to avoid feeding-out to the closed outfeed tubes by way of the ejection channel 33, the gate means 30 are also provided with a closing plate 37 providing for closing of the opening between the ejection channel 33 and the outfeed tube 21 in question when the inlet opening to the outfeed tube is closed.

Such as schematically shown in Figs. 1 and 2, the stationary member with the outfeed tubes 21 is rigidly connected to the feed hopper 10 by means of screw bolt connections 38 passing through bores in respective connection members 39.

The driving means for operation of the two outfeed means 1 and 2 with mutually adjustable speeds may be designed in different ways. In the illustrated embodiment the drive means comprises first and second drive shafts 40 and 41, respectively, which are disposed at right angles to the shaft 3 of the first outfeed means 1 and are mounted in a schematically shown casing 42 wherein there is also provided an additional bearing 43 for supplementary mounting of the sleeve portion 16 of the second outfeed means. The first shaft 40 is coupled through a bevel gear means 44 to the shaft 3 of the first outfeed means, whereas the second shaft 41 is coupled through a bevel gear means 45 to the sleeve portion 16 of the second outfeed means. Of the two shafts e.g. the second shaft 41 may be arranged to be driven directly from a running wheel on the machine wherein the apparatus is to be used, e.g. on a seed drill, or the shaft may be driven from a suitable motor. For driving of the first shaft, i.e. the shaft 40, this may be coupled to the second shaft by way of a variator (not shown) which may e.g. allow the second shaft 41 to rotate 0—20% faster than the first one, something which is sufficient to achieve an outfeed quantity which varies from zero to the largest quantity which normally will be of interest.

The described apparatus is constructed and designed so that it is suitable for manufacturing from parts which essentially consist of suitable plastics materials. This enables rational and economic manufacture and also that the entire apparatus becomes light of weight.

The operation of the apparatus is supposed to be clear from the preceding description, so that only a short review of the principal main features will be given here.

When the two outfeed means of the apparatus rotate with suitable speed in the direction of the arrow A shown in Fig. 2, and granular material (or powder material) is supplied to the central area 9 of the first outfeed means, this material will, under the action of the centrifugal force, be flung out through the openings 14 of the inner shielding wall 8 and against the inner surface of the outer shielding wall 11, the material in the annular compartment 12 resting on the bottom plate 18 (possibly on the bottom plate 24 by feeding-out through the upper annular compartment portion). If the outfeed means rotate with the same speed, no material will be fed out from the apparatus as the outer shielding wall blocks or obstructs the material in the annular compartment and this material lies still in relation to the shielding walls. On the other hand, as soon as the two outfeed means are driven with different speeds, a movement of the material takes place in the direction towards the outfeed openings 15 in the outer shielding wall 11. In the illustrated embodiment it is presupposed that the second outfeed means 2 is driven with higher speed than the first outfeed means 1, and when the speeds thus are different, the material is advanced by means of the outfeed elements 22, respectively 26, to the outfeed openings 15 of the outer shielding wall 11 in a quantity per unit of time which is directly dependent on the relative speed difference between the outfeed means. It will be seen that the material quantity which is fed out to each outfeed tube 21 through a respective outfeed opening 15 in the short time during which the opening passes the outfeed tube in question, may be varied from zero and upwards to a maximum outfeed capacity for the opening in that the relative speed difference is increased correspondingly from zero and upwards. Executed tests have shown that, with varying particle size of the fed-out material and with varying feeding-out speed, one achieves a feeding-out having a very high degree of stability compared with the devices according to the prior art.

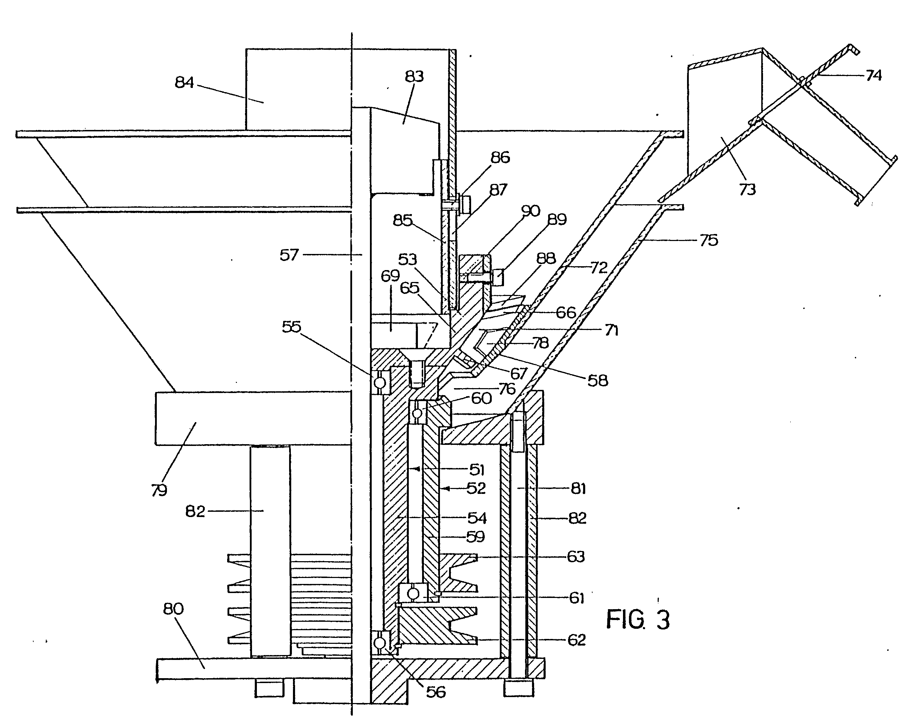

The embodiment of the dosing apparatus according to the invention which is shown in Fig. 3, is that which at present is considered as the preferred embodiment as it has a particularly simple construction and may be manufactured correspondingly rationally and economically by means of suitable plastics materials.

The apparatus comprises a first outfeed means 51 and a second outfeed means 52 (which are both hatched in a manner corresponding to that of the embodiment in Fig. 1). The first outfeed means 51 comprises an upper boundary wall portion 53 and a downwards projecting cylindrical sleeve portion 54 which, by means of a pair of ball bearings 55 and 56, is rotatably mounted on a shaft 57 which in this embodiment is stationary and is rigidly connected to other stationary members of the apparatus, such as more closely described below. The second outfeed means 52 also comprises an upper boundary wall portion 58 and a downwards projecting sleeve portion 59 which is rotatably mounted on the sleeve portion 54 of the first outfeed means by means of a pair of ball bearings 60 and 61. On the lower end of the sleeve portion 54 of the first outfeed means there is fixed a V-belt pulley 62, and on the lower end of the sleeve portion 59 of the second outfeed means there is fixed a V-belt pulley 63. The V-belt pulleys are driven by means of driving means which may be arranged in a manner corresponding to that of the embodiment according to Figs. 1-2, and such that the second or outer outfeed means 52 is preferably driven with the highest speed.

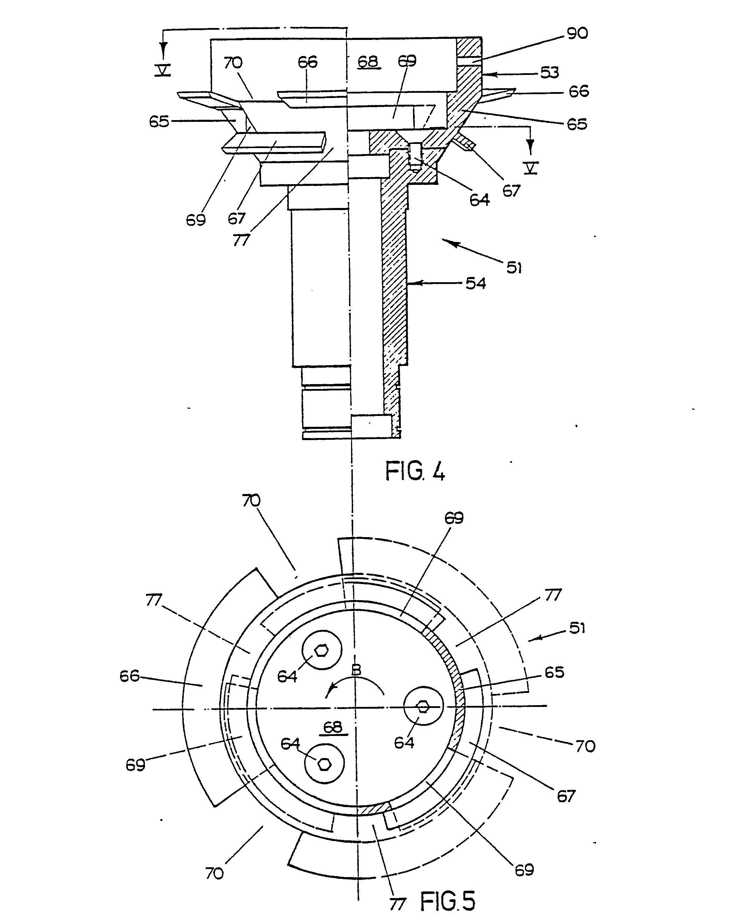

In Figs. 4—5 the design of the first outfeed means 51 is shown in more detail. Even if the outfeed means may be manufactured in one piece, it consists in the illustrated embodiment of two parts fixed to each other by means of three screws 64. The boundary wall portion 53 of the outfeed means comprises an upwards extending, inner shielding wall 65, an outer shielding wall 66 projecting outwards from an upper portion of the outside of the inner shielding wall 65, and further a lower bottom wall flange 67. The central area to which material to be fed out is supplied, is designated 68 and is defined by the bottom surface of the boundary wall portion and the cylindrical inner surface of the inner shielding wall 65. the inner shielding wall is provided with three equally spaced outfeed openings 69, and the outer shielding wall 66 is similarly provided with three equally spaced outfeed openings 70 which, as viewed in the rotational direction of the outfeed means (the arrow B in Fig. 5), are placed behind the first-mentioned outfeed openings 69, i.e. they are sufficiently peripherally displaced in relation to these in order that the outer shielding wall 66 by rotation of the outfeed means 51, 52 prevents direct material discharge from the outfeed openings of the inner shielding wall.

Such as appears from Fig. 3, the boundary wall portion 58 of the second outfeed means 52 has an upwards diverging boundary wall which extends substantially parallel with the outer side of the inner shielding wall and, together with the shielding walls 65, 66 and the bottom wall flange 67 on the first outfeed means 51, define an annular outfeed compartment 71, and which further passes into a conical outfeed hopper 72. The outfeed hopper is shown as a separate member which is fixed to the second outfeed means 52, e.g. by means of rivets (not shown), but it may also be formed integrally therewith.

It will be seen that the outfeed hopper 72 corresponds to the throwing bowl 19 in the embodiment according to Figs. 1—2, and in a manner corresponding to that of the first embodiment a plurality of adjacent, stationary outfeed tubes 73 are arranged around the outfeed hopper at its upper end. For a corresponding purpose as stated in connection with the first embodiment, each of the outfeed tubes 73 are provided with a gate or flap 74 for possible closing of the outfeed tube. In a manner corresponding to that of the throwing bowl 19 the outfeed hopper 72 may be provided with throwing blades (not shown) in order ensure uniform distribution of fed-out material to the outfeed tubes 73, also when the dosing apparatus is used in an inclined position (e.g. during operation in inclined country).

Under the outfeed hopper 72 there is provided a stationary hopper 75 for return of fed-out material falling back from the outfeed tubes 73, e.g. when these are closed. For returning the return material to the outfeed compartment 71 the boundary wall 58 of the second outfeed means 52 is in its lower region provided with a plurality of return openings 76 distributed along the circumference thereof. When the return material fills the bottom region between the return hopper 75 and the boundary wall 58 so that the material because of its weight is carried through the return openings 76, it is flung upwards towards the outfeed compartment 71 as a result of the action of the centrifugal force during operation of the apparatus, and for passage of this material to the outfeed compartment the bottom wall flange 67 is provided with three transfer openings 77 which are equally spaced along the circumference of the flange, such as appears from Fig. 5. Such as further appears from Fig. 5, these transfer openings 77 are peripherally displaced in relation to, and more specifically located behind, the outfeed openings 69 of the inner shielding wall, as viewed in the rotational direction B of the outfeed means, in such a way that the flow of return material is not prevented by the outfeed flows from the outfeed openings 69 of the inner shielding wall 65. Further, as shown, the transfer openings 77 are also displaced in relation to the outfeed openings 70 of the outer shielding wall, so that return material is not allowed to be fed out directly from the transfer openings 77 via the outfeed openings 70, as this would result in varying outfeed quantity with and without return material. Thus, it is ensured that the return material, in a corresponding manner to that of the other material, is fed out in a controlled manner in that it is advanced to the outfeed openings 70 by means of the second outfeed means 52 as a result of the relative speed difference between the outfeed means.

In order to ensure uniform advance to the outfeed openings 70 of the material which is present in the outfeed compartment 71, the second outfeed means is provided with a plurality of upstanding feeding-out elements 78 which are arranged with suitable spacing along the circumference.

In the embodiment of Fig. 3 the stationary return hopper 75 is supported by an annular holder 79 which is in turn rigidly connected to a base member 80 by means of three screw bolts 81 which are distributed around the stationary shaft 57 and are passed through respective distance tubes 82. The lower end of the stationary shaft 57 is fixed in a central hole in the base member 80, and to the upper end portion of the shaft there is fixed three radially extending brackets 83 (only one is shown) carrying a feed cylinder 84 for supply of material to the apparatus. In the lower end portion of the feed cylinder 84 there is arranged a cylindrical slide gate 85 which in Fig. 3 is fixed in an upper position by means of at least one screw 86. An axial slot 87 in the feed cylinder allows that the screw and therewith the slide gate may be moved downwards in order to reduce the size of the outfeed openings 69 or to close these if desired.

In order to be able to adjust the size and partly the location of the outfeed openings 70 of the outer shielding wall 66, an additional slide gate means 88 with openings corresponding to the outfeed openings 70 is mounted on the shielding wall portion 53. The gate means may be displaced peripherally on the shielding wall portion by means of at least one screw 89 which is passed through a suitable peripheral slot in the gate means and threaded into a hole 90 in the shielding wall portion 53.

It will be seen that the outer shielding wall 66 does not have to be a fixed part of the shielding wall portion 53, but may be displaceable along the periphery thereof in a manner corresponding to that of the slide gate means 88. One may then adjust the location of the outfeed openings 70 in relation to the position of the inner outfeed openings 69 and the transfer openings 77 (which may possibly also have adjustable location), in order to optimise the function of the apparatus under varying operational conditions.

## Claims

1. Dosing apparatus for granular or powder material, comprising a feeding-out device (1, 2; 51, 52) which is rotatable about a normally substantially vertical axis (3), and is adapted to be supplied with said material in a central material-receiving area (9; 68), whereby the supplied material by rotation of the device is flung out from the central area (9; 68) by the action of the centrifugal force, to be fed out through a plurality of outfeed openings (14, 15; 69, 70), said apparatus further comprising first and second, coaxially disposed outfeed means (1, 2; 51, 52) which are arranged to rotate with mutually differing speeds, the outfeed means (1, 2; 51, 52) having cooperating parts (8, 11 and 18, 22; 65, 66 and 58, 78) which, by relative speed difference between said cooperating parts, move the flung-out material out through said outfeed openings (14, 15; 69, 70), and being characterized in that the first outfeed means (1; 51), containing said central area (9; 68), comprises inner and outer circumferentially extending, shielding walls (8, 11; 65, 66) each having said outfeed openings (14, 15; 69, 70) mutually displaced along the circumference, and defining an outfeed compartment (12; 71) together with a boundary wall (18; 58) of the second outfeed means (2; 52), and in that the outfeed openings (15; 70) of the outer shielding wall (11; 66) are sufficiently circumferentially displaced in relation to the outfeed openings (14; 69) of the inner shielding wall (8; 65) that the outer shielding wall (11; 66) prevents direct discharge of material from the outfeed openings of the inner shielding wall, and in that the second outfeed means (2; 52) is provided with a plurality of outfeed elements (22; 78) projecting upwards in the outfeed compartment (12; 71) and being circumferentially spaced along the outfeed compartment.

2. Apparatus according to claim 1, characterized in that the shielding walls are constituted by a pair of cylindrical, radially spaced shields (8, 11) defining the intermediate outfeed compartment (12) in which said boundary wall of the second outfeed means (2) forms a lower bottom surface (18).

3. Apparatus according to claim 2, characterized in that the outfeed compartment (12) defined between the shielding walls (8, 11) includes an additional, upper bottom surface (24) supported by the second outfeed means (2), a bottom-surface-forming cover (27) being provided in the central area (9) of the first outfeed means (1) and being fixable in an upper position for feeding-out of material to said additional bottom surface (24).

4. Apparatus according to claim 2 or 3, characterized in that the first outfeed means (1) is fixedly connected to a rotatably mounted central shaft (3) and the second outfeed means (2) is rotatably mounted on said shaft (3) and further is rotatably mounted in a stationary supporting means (4), said shaft (3) and the second outfeed means (2) being coupled to respective driving means (40, 44 resp. 41, 45) with mutually adjustable speeds.

5. Apparatus according to any of the claims 2—4, characterized in that the second outfeed means (2) includes a peripheral, outer throwing bowl (19) with a plurality of throwing blades (20) for distribution of fedout material to a plurality of stationary outfeed tubes (21) along the outer circumference of the throwing bowl.

6. Apparatus according to claim 5, characterized in that the outfeed tubes (21) are provided with bottom openings (28) for supply of fed-out material to an underlying, stationary and downwards open return bowl (29), the outfeed tubes (21) being closable outside the bottom openings.

7. Apparatus according to claim 6, characterized in that a return throwing screen (32) is arranged under the return bowl (29) and is hieght-adjustably connected to the second outfeed means (2), such that, in a lower position, it provides for return of material from the return bowl (29) to the outfeed tubes (21) and, in an upper position, allows direct outlet of material which is fed out through the return bowl (29).

8. Apparatus according to any of the claims 1—7, characterized in that the outfeed openings (14, 15) of the first outfeed means (1) have inclined side-limiting walls.

9. Apparatus according to claim 1, characterized in that the shielding walls are constituted by an upwards extending inner shielding wall (65) and an outer shielding wall (66) essentially outwards projecting from an upper portion of the inner shielding wall, said boundary wall (58) of the second outfeed means (52) being upwards diverging and passes into a conical outfeed hopper (72).

10. Apparatus according to claim 9, characterized in that, under the outfeed hopper (72) there is arranged a stationary hopper (75) for return of fed-out-material, the second outfeed means (52) being provided with a plurality of peripherally distributed return openings (76) communicating with the outfeed compartment (71).

11. Apparatus according to claim 10, characterized in that a lower area of the outfeed compartment (71) is defined by a bottom wall (67) projecting outwards from the first outfeed means (51) and being provided with a plurality of openings (77) distributed along its circumference for the passage of return material in the outfeed compartment (71).

12. Apparatus according to any of the claims 9—11, characterized in that the size of the outfeed openings (69, 70) is adjustable by means of gate means (85 resp. 88).

13. Apparatus according to any of the claims 9—12, characterized in that the first outfeed means (51) includes a sleeve portion (54) extending downwards from the shielding wall region and being mounted on a stationary shaft (57), and that the second outfeed means (52) also includes a downwards extending sleeve portion (59) mounted on a sleeve portion of the first outfeed means, the sleeve portions (54, 59) being coupled to respective driving means (62, 63) with mutually adjustable speeds.

## Revendications

1. Appareil de dosage pour un matériau granulaire ou pulvérulent, comprenant un dispositif distributeur (1, 2: 51, 52) qui peut tourner autour d'une axe normalement essentiellement vertical (3), et qui est agencé pour être alimenté avec ledit matériau dans une zone centrale de réception de matériau (9; 68), de façon que le matériau introduit soit refoulé, par rotation du dispositif, à partir de la zone centrale (9 ; 68) sous l'action de la force centrifuge, pour sortir par plusieurs ouvertures de décharge (14, 15 ; 69, 70), ledit appareil comprenant en outre un premier et un second moyen de décharge disposés coaxialement (1, 2; 51, 52) qui sont agencés pour tourner à des vitesses mutuellement différentes, les moyens de décharge (1, 2; 51, 52) comportant des parties coopérantes (8, 11 et 18, 22; 65, 66 et 58, 78) qui, sous l'effet d'une différence entre les vitesses desdites parties coopérantes, font sortir la matière refoulée par l'intermédiaire desdites ouvertures de décharge (14, 15; 69, 70), l'appareil étant caractérisé en ce que le premier moyen de décharge (1; 51), contenant ladite zone centrale (9; 68), comprend des parois protectrices intérieure et extérieure s'étendant circonférentiellement (8, 11; 65, 66) comportant chacune lesdites ouvertures de décharge (14, 15; 69, 70) mutuellement décalées le long de la circonférence, et définissant un compartiment de décharge (12; 71) en coopération avec une paroi de délimitation (18; 58) du second moyen de décharge (2; 52), en ce que les ouvertures de décharge (15; 70) de la paroi protectrice extérieure (11; 66) sont suffisamment décalées circonférentiellement par rapport aux ouvertures de décharge (14; 69) de la paroi protectrice intérieure (8; 65) pour que la paroi protectrice extérieure (11; 66) empêche une décharge directe du matériau à partir des ouvertures de décharge de la paroi protectrice intérieure, et en ce que le second moyen de décharge (2; 52) est pourvu de plusieurs éléments de décharge (22; 78) faisant saillie vers le haut dans le compartiment de décharge (12; 71) et espacés circonférentiellement le long du compartiment de décharge.

2. Appareil selon la revendication 1, caractérisé en ce que les parois protectrices sont constituées par deux boucliers cylindriques et radialement especés (8, 11) définissant le compartiment intermédiaire de décharge (12) dans lequel ladite paroi de délimitation du second moyen de décharge (2) forme une surface inférieure de fond (18).

3. Appareil selon la revendication 2, caractérisé en ce que le compartiment de décharge (12), défini centre les parois protectrices (8, 11), comprend une surface supérieure de fond additionnelle (24) supportée par le second moyen de décharge (2), un couvercle de formation de surface de fond (27) étant prévu dans la zone centrale (9) du premier moyen de décharge (1) et pouvant être fixé dans une position supérieure en vue d'une distribution du matériau sur ladite surface de fond additionnelle (24).

4. Appareil selon l'une des revendications 2 ou 3, caractérisé en ce que le premier moyen de décharge (1) est relié de façon fixe à un arbre central (3) monté à rotation et en ce que le second moyen de décharge (2) est monté à rotation sur ledit arbre (3) et est en outre monté à rotation dans un moyen porteur stationnaire (4), ledit arbre (3) et le second moyen de décharge (2) étant accouplés avec des moyens respectifs (40, 44 et 41, 45) assurant leur entraînement à des vitesses mutuellement réglables.

5. Appareil selon l'une quelconque des revendications 2 à 4, caractérisé en ce que le second moyen de décharge (2) comprend une cuvette périphérique extérieure de poussée (19) qui est pourvue d'une pluralité de pales de poussée (20) pour une distribution de la matière dans plusieurs tubes stationnaires de décharge (21) le long de la circonférence extérieure de la cuvette de poussée.

6. Appareil selon la revendication 5, caractérisé en ce que les tubes de décharge (21) sont pourvus d'ouvertures inférieures (28) pour faire arriver la matière distribuée dans une cuvette de retour (29) placée en-dessous, stationnaire et ouverte vers le bas, les tubes de décharge (21) pouvant être obturés à l'extérieur des ouvertures inférieures (28).

7. Appareil selon la revendication 6, caractérisé en ce qu'un écran pousseur de retour (32) est disposé endessous de la cuvette de retour (29) et est relié, en étant réglable en hauteur, au second moyen de décharge (2) de manière que, dans une position inférieure, il assure un retour de la matière depuis la cuvette de retour (29) jusque dans les tubes de décharge (21) alors que, dans une position supérieure, il permet une sortie directe de la matière qui est déchargée par l'intermédiaire de la cuvette de retour (29).

8. Appareil selon l'une quelconque des revendications 1 à 7, caractérisé en ce que les ouvertures de décharge (14, 15) du premier moyen de décharge (1) comportent des parois inclinées de délimitation latérale.

9. Appareil selon la revendication 1, caractérisé en ce que les parois protectrices sont constituées par une paroi protectrice intérieure (65) s'étendant vers le haut et une paroi protectrice extérieure (66) faisant saillie essentiellement vers l'extérieur à partir d'une partie supérieure de la paroi protectrice intérieure, ladite paroi de délimitation (58) du second moyen de décharge (52) divergeant vers le haut et étant suivie par une trémie conique de décharge (72).

10. Appareil selon la revendication 9, caractérisé en ce qu'il est prévu, en-dessous de la trémie de décharge (72), une trémie stationnaire (75) pour un retour de la matière distribuée, le second moyen de décharge (52) étant pourvu de plusieurs ouvertures de retour (76), réparties périphériquement et communiquant avec le compartiment de décharge (71).

11. Appareil selon la revendication 10, caractérisé en ce qu'une zone inférieure du compartiment de décharge (71) est définie par une paroi de fond (67) faisant saillie vers l'extérieur à partir du premier moyen de décharge (51) et étant pourvue de plusieurs ouvertures (77) réparties le long de sa circonférence pour le passage de la matière en retour dans le compartiment de décharge (71).

12. Appareil selon l'une quelconque des revendications 9 à 11, caractérisé en ce que la dimension des ouvertures de décharge (69, 70) est réglable au moyen de volets (85, 88).

13. Appareil selon l'une quelconque des revendications 9 à 12, caractérisé en ce que le premier moyen de décharge (51) comprend une partie formant manchon (54) qui s'étend vers le bas à partir de la zone de paroi protectrice et qui est montée sur un arbre stationnaire (57), et en ce que le second moyen de décharge (52) comprend également une partie formant machon (59), s'étendant vers le bas et montée sur une partie formant manchon du premier moyen de décharge, les parties formant manchon (54, 59) étant accouplées à des moyens respectifs (62, 63) assurant leur entraînement à des vitesses mutuellement réglables.

**Patentansprüche**

1. Dosiereinrichtung für ein körniges bzw pulverförmiges Material, mit einer um eine normalerweize im wesentlichen senkrechte Achse (3) drehbar gelagerten Verteilungsvorrichtung (1, 2; 51, 52), die so ausgebildet ist, daß sie in einem mittigen Materialaufnahmebereich (9, 68) mit Material derart versorgt wird, daß das eingeführte Material dürch Drehung der Vorrichtung vom mittigen Bereich (9, 68) aus unter der Einwirkung der Zentrifügalkraft gefördert und durch mehrere Austragsöffnungen (14, 15, 69, 70) ausgetragen wird, ferner mit einem ersten und einem zweiten koaxial angeordneten Austragsmittel (1, 2; 51, 52) die derart ausgelegt sind, daß sie mit gegeneinander unterschiedlichen Geschwindigkeiten drehen, wobei die Austragsmittel (1, 2; 51, 52) zusammenwirkende Teile (8, 11 und 18, 22; 65, 66 und 58, 78) aufweisen, welche infolge eines Unterschiedes zwischen den Geschwindigkeiten der besagten Zusammenwirkenden Teile das geförderte Material durch die Austragsöffnungen (14, 15; 69, 70) hindurch austragen lassen, dadurch gekennzeichnet, daß das den mittigen Bereich (9, 68) aufweisende erste Austragsmittel (1, 51) sich in Umfangsrichtung erstreckende innere und äußere Schutzwände (8, 11; 65, 66) besitzt, von denen jede mit den längs des Umfanges gegenseitig versetzten Austragsöffnungen (14, 15; 69, 70) versehen ist, wobei sie zusammen mit einer Begrenzungswand (18; 58) des zweiten Austragsmittels (2, 52) einen Austragsraum (12, 71) bilden, daß die Austragsöffnungen (15, 70) der äußeren Schutzwand (11, 66) gegenüber den Austragsöffnungen (14, 69) der inneren Schutzwand (8, 65) in Umfangrichtung derart ausreichend versetzt sind, daß die äußere Schutzwand (11, 66) einen unmittelbaren Materialaustrag von den Austragsöffnungen der inneren Schutzwand aus verhindert, und daß das zweite Austragsmittel (2, 52) mit mehreren nach oben in den Austragsraum (12, 71) hineinragenden, in der Umfangsrichtung längs des Austragsraumes mit Abstand angeordneten Austragselementen (22, 78) ausgestattet ist.

2. Einrichtung nach Anspruch 1, dadurch gekennzeichnet, daß die Schutzwände aus zwei zylindrischen, mit radialem Abstand angeordneten Schilden (8, 11) bestehen, die den mitteren Austragsraum (12) begrenzen, im welchem die Begrenzungswand des zweiten Austragsmittel (2) eine untere Bodenfläche (18) bildet.

3. Einrichtung nach Anspruch 2, dadurch gekennzeichnet, daß der zwischen den Schutzwänden (8, 11) gebildete Austragsraum (12) eine zusätliche, vom zweiten Austragsmittel (2) gestützte obere Bodenfläche (24) aufweist, wobei im mitteren Bereich (9) des ersten Austragsmittels (1) ein Deckel (27) zur Bildung einer Bodenfläche vorgesehen ist, der zwechs einer Materialverteilung auf der susätzlichen Bodenfläche (24) in einer oberen Lage festgesetzt werden kann.

4. Einrichtung nach einem der Anspruch 2 oder 3, dadurch gekennzeichnet, daß das erste Austragsmittel (1) mit einer drehbar gelagerten mittigen Welle (3) fest verbunden ist, und daß das zweite Austragsmittel (2) auf der besagten Welle (3) und ferner in einem festen Trägermittel (4) drehbar gelagert ist, wobei die Welle (3) und das zweite Austragsmittel (2) mit jeweiligen, ihren Antrieb mit gegeneinander regelbaren Geschwindigkeiten bewirkende Gliedern (40, 44 und 41, 45) angekoppelt sind.

5. Einrichtung nach irgendeinem der Ansprüche 2 bis 4, dadurch gekennzeichnet, daß das sweite Austragsmittel (2) einen äußeren, sich in Umfangsrichtung erstreckenden Schiebetopf (19) aufweist, der zu einer Materialabgabe in mehrere feste Austragsrohre (21) längs des äußeren Umfanges des Schiebetopfes mit einer großen Anzahl von Schiebeflügeln (20) ausgerüstet ist.

6. Einrichtung nach Anspruch 5, dadurch gekennzeichnet, daß die Austragsrohre (21) zur Einführung des verteilten Materials in einen darunter leigenden, festen und nach unter geöffneten Rückförderungsstopf (29) untere Öffnungen (28) aufweisen, wobei die Austragsrohre (21) außerhalb der unteren Öffnungen (28) absperrbar ausgebildet sind.

7. Einrichtung nach Anspruch 6, dadurch gekennzeichnet, daß eine Rückförderung-Schiebeblende (32) unter dem Rückförderungstopf (29) angeordnet und mit dem zweiten Austragsmittel (2) höhenverstellbar verbunden ist, derart, daß sie in einer unteren Lage eine Rückförderung des Materials vom Rückförderungsstopf (29) aus bis in die Austragsrohre (21) gestattet, während sie in einer oberen Lage einen unmittelbaren Austritt des mit Hilfe des Rückförderungstopfes (29) ausgetragenen Materials zuläßt.

8. Einrichtung nach irgendeinem der Anspruch 1 bis 7, dadurch gekennzeichnet, daß die Austragsöffnungen (14, 15) des ersten Austragsmittels (1) schräge seitliche Begrenzungswände aufweisen.

9. Einrichtung nach Anspruch 1, dadurch gekennzeichnet, daß die Schutzwände aus einer sich nach oben erstreckenden inneren Schutzwand (65) und einer von einem oberen Teil der inneren Schutzwand aus im wesentlichen nach außen hinausragenden äußeren Schutzwand (66) bestehen, wobei die Begrenzungswand (58) des zweiten Austragsmittels (52) nach oben divergierend sich mit einem kegelförmigen Auslauftrichter (72) fortsetzt.

10. Einrichtung nach Anspruch 9, dadurch gekennzeichnet, daß unterhalb des Auslauftrichters (72) ein fest angeordneter Trichter (75) für eine Rückförderung des verteilten Materials vorgesehen ist, wobei das zweite Austragsmittel (52) mit mehreren in Umfangsrichtung verteilten, mit dem Austragsraum (71) kommunizierenden Rücklauföffnungen (76) versehen ist.

11. Einrichtung nach Anspruch 10, dadurch gekenzeichnet, daß ein unterer Bereich des Austragsraumes (71) durch eine vom ersten Austragsmittel (51) aus nach außen hinausragende Bodenwand (67) begranzt ist, die mehrere längs ihres Umfanges zum Durchtritt des in den Austragsraum (71) zurückgeförderten Materials verteilt angeordnete Öffnungen (77) aufweist.

12. Einrichtung nach irgendeinem der Ansprüche 9 bis 11, dadurch gekennzeichnet, daß das Ausmaß der Austragsöffnungen (69, 70) mittels klappen (85, 88) regelbar ist.

13. Einrichtung nach irgendeinem der Ansprüche 9 bis 12, dadurch gekennzeichnet, daß das erste Austragsmittel (51) einen Stützen (54) bildenden Teil aufweist, der sich vom Bereich der Schutzwand aus nach unten erstreckt und auf einer festen Welle (57) gelagert ist, und daß das zweite Austragsmittel (52) seinerseits auch einen einen Stützen (59) bildenden Teil besitzt, der sich nach unten erstreckt und auf einem einem Stützen bildenden Teil des ersten Austragsmittel gelagert ist, wobei die Stützen (54, 59) bildenden Teile an zugeordneten Mitteln (62, 63) angekoppelt sind, die ihren Antrieb mit gegenseitig regelbaren Geschwindigkeiten bewirken.

FIG 1

FIG.2

FIG. 3

FIG. 4

FIG.5